# EUROPEAN PATENT SPECIFICATION

(11) **EP 2 895 653 B1**
(45) Date of publication and mention of the grant of the patent: **13.03.2019**
(21) Application number: 13836496.3
(22) Date of filing: 16.09.2013
(51) Int. Cl.: D21C 9/00, D21H 11/20, D21C 5/02, D01F 2/00

(54) **METHOD OF PRODUCING DISSOLVING PULP, DISSOLVING PULP AND USE OF METHOD**
VERFAHREN ZUR HERSTELLUNG EINES AUFLÖSUNGSZELLSTOFFS, AUFLÖSUNGSZELLSTOFF UND ANWENDUNG DES VERFAHRENS
PROCÉDÉ POUR LA PRODUCTION DE PÂTE DISSOLVANTE, PÂTE DISSOLVANTE ET UTILISATION DU PROCÉDÉ

(30) Priority: 14.09.2012 FI 20125953
(43) Date of publication of application: 22.07.2015
(73) Proprietor: Infinited Fiber Company Oy, 02300 Espoo (FI)
(72) Inventor: ASIKAINEN, Sari, FI-02044 Vtt (FI); MÄÄTTÄNEN, Marjo, FI-02044 Vtt (FI); HARLIN, Ali, FI-02044 Vtt (FI); VALTA, Kyösti, FI-33230 Tampere (FI); SIVONEN, Eino, FI-02044 Vtt (FI)
(74) Representative: Seppo Laine Oy
(86) International application number: PCT/FI2013/050892
(87) International publication number: WO 2014/041251

(56) References cited:
- WO-A1-95/20066
- WO-A1-2008/141463
- CA-A1- 2 568 594
- US-A- 6 136 041
- US-A1- 2011 272 109
- US-B1- 6 254 722
- US-B1- 6 254 722

## Description

The present invention relates to dissolving pulps. In particular the invention concerns a method of producing dissolving pulps according to the preamble of claim 1.

In a method of the present kind, a cellulosic feedstock is subjected, optionally after a pretreatment step which comprises reducing the content of lignin or hemicelluloses or both, to cold alkaline extraction.

The present invention also relates to uses of the method.

The demand for dissolving pulps has increased during the recent years. In particular, dissolving pulps are much sought for as raw-material for special fibres, and since the demand has surpassed the supply, the price of suitable dissolving pulp stocks has soared. At the same time, the supply of competing raw-materials, such as cotton, has been limited.

Typically dissolving pulps are produced directly from wood raw-materials by suitable cooking methods which are particularly tailored for making dissolving pulps. There are also disclosed in literature various approaches for converting industrial paper pulps into dissolving pulp, e.g. extraction with alkaline agents and optionally enzymatic treatments with hemicellulases to remove hemicelluloses, such as xylan, from the pulps. In this respect reference is made to Hyatt, J., Fengel, R., Edgar, J. & Alvarez, M., Process for the co-production of dissolving-grade pulp and xylan and International Patent Application No. WO 9816682.

US Patent No. 6,254,722 discloses a method of producing dissolving pulps from cellulosic fibers, more particularly from recycled waste paper formed by envelope clippings and ledger papers, wherein the fibre source is subjected to an extraction with aqueous sodium hydroxide in order to remove or degrade hemicelluloses at a temperature of about 23 °C.

Thus, the method is based on a specific kind of cellulosic, in practice lignin-free raw-material which is not particularly abundant.

WO 2010/104458 is directed to a process for combining the production of cellulosic fiber products from virgin lignocellulosic fibres such as wood and straw in a kraft, sulfite or soda AQ pulp mill with a process for dissolving cellulose using a new solvent system wherein at least a part of the spent cellulose solvent chemicals are recovered in one or more unit operations in the pulp mill chemical recovery cycle.

EP 0 637 351 discloses the preparation of a variety of wood-free and white paper products from recyclable paper and card products having low lignin content.

It is an aim of the present invention, to provide dissolving pulps from recycled cellulosic fibres which are available in large volumes and which form an inexpensive feedstock.

In particular it is an aim of the present invention to provide dissolving pulps from recycled cellulosic fibres that are already degraded in terms of mechanical properties and that typically contain difficult to remove compounds and dirt.

The present invention is based on the concept of using as a cellulosic feedstock for the production of dissolving pulps or similar fibrous products, which are capable of being subjected to dissolution with dissolving reagents, recycled or circulated papers or cardboards which contain cellulose, lignin and hemicelluloses. The recycled or circulated papers or cardboards may also contain fillers, metals, fines and other impurities. Such a feedstock is modified, if necessary, to provide a fibrous raw-material having a low to modest lignin content and a low ash content. The fibrous raw-material is then subjected to cold alkaline extraction to reduce hemicelluloses concentration, and to a bleaching treatment with an oxidative chemical reagent to reduce lignin content, and the fibrous material thus obtained is recovered as pulp.

The method can be used for preparing pulp for the production of regenerated cellulosic fibres, films and foams, impregnated fiber products, and for the production of cellulosic derivatives, and for the production of nanocellulosic products. Particularly interesting applications are in the field of production of regenerated cellulosic products by the viscose process, NMMO process, enzymatic processes and the carbamate process.

More specifically, the method of the present invention in mainly characterized by what is stated in the characterizing portion of claim 1.

The uses according to the present invention are characterized by what is stated in claims 13 and 14.

Considerable advantages are obtained by the present invention. Thus, is has been found that recycled fibres for paper and cardboard products serve well as raw-material for dissolving pulps. Based on results obtained, dissolving pulps produced by the present technology have properties comparable with or even superior to the commercial reference pulps used for reference. For example recycled fluting pulp gave dissolving pulps having excellent properties in terms of the Fock value and could be used for producing regenerated fibres, as evidenced by excessive spinning testing, and films.

Also uncoated fines papers (office papers) were useful and gave good results when the pulp was dissolved using dissolution chemicals such as carbamic acid.

The present invention which utilizes recycled fibers for preparing dissolving pulps represents an important step toward a more sustainable and non-polluting textile industry.

The present invention provides for the manufacture for other products than e.g. paper, cardboard and similar traditional products which are prepared from the instant raw-materials. The cellulose material of the used fibres can be recovered and subjected to chemical modification to provide cellulose chemicals or regenerated fibre. These targets place high demands on the quality of the cellulose.

In the present invention, recycled fibres which exhibit mechanical properties which are weakened and which typically contain substances and impurities and dirt which are difficult to remove. Conventionally, dispersion of recycled fibres aims at decomposing printing ink and sticky compounds and other impurities to smaller compounds and to remove them from the fibres to allow for removal from the fibrous pulp at a later stage. These kinds of conventional processing steps are not sufficient to provide fibres suitable for the above mentioned aims, such as dissolving pulp.

Next the invention will be examined in more detail with reference to a number of working examples.

In the attached drawings,
Figure 1 shows the process scheme for an embodiment of a method of preparing dissolving pulp from deinked fine paper according to the present technology;
Figure 2 shows the corresponding process scheme for an embodiment of a method, according to the present technology, of preparing dissolving pulp from cardboard; and
Figure 3 shows schematically a spinning line consisting of three godet rolls, one stretching bath with hot demineralised water, two washing baths with cold demineralised water and a fibre collector.

As discussed above, the present method of producing dissolving pulp from a recycled fibrous feedstock, comprises in combination the following steps:
- providing a fibrous material comprising cellulose, lignin and hemicellulose, said fibre source further having a lignin content of 0.1 to 7 % lignin and an ash content of up to 3 %;
- subjecting the fibrous material to an alkaline extraction at a temperature of about 0 to 25 °C, to produce fibres having a reduced content of hemicellulose;
- subjecting the fibres thus obtained to a bleaching treatment carried out with oxidative chemical reagents in order to reduce the lignin content of the fibres; and
- recovering the fibres thus obtained.

In a preferred embodiment, the recycled fibrous feedstock is selected from recycled paper and recycled cardboard products and combinations thereof which comprise at least 1 %, typically at least 5 %, and in particular about 7 to 50 %, by weight of lignocellulosic fibre materials. Examples of suitable feedstock materials are the following: office papers and other fine papers which typically are uncoated, envelopes papers, single layered or multilayered cardboards, fluting and liner sheets of corrugated boards, and folding box boards. In a particular embodiment, the recycled papers are selected from office papers, and the recycled cardboard products are selected from liner clippings. As will be discussed below, the recycled paper or cardboard product can be deinked in conventional manner before further processing.

The fibrous material typically comprises at least 50 % by weight of cellulosic fibres. The fibres can consist of up to 100 % by weight of cellulose (woodfree) fibres. Typically, the fibres of the fibrous material are formed by mixtures of fibres obtained from chemical and mechanical pulping. In one embodiment, the fibrous material comprises 50 to 95 % by weight of fibres of chemical pulping and 5 to 50 % by weight of fibres of mechanical pulping. The fibres of the mechanical pulping are generally rich in lignin, the concentration of which may be up to 20 % by weight of the dry fibres.

The cellulosic fibres of the fibrous material can be derived from deciduous tree, coniferous tree or combinations thereof. Examples of deciduous tree species include birch, aspen and other species of the *Populus* genus, alder, eucalyptus, mixed tropical wood and mixtures of the above mentioned species. Examples of coniferous tree species include spruce and pine and mixtures thereof.

Preferably at the most 70 %, in particular at the most 60 %, by weight of the fibre source consists of fibres derived from deciduous tree.

In an embodiment, the fibrous material comprises the recycled fibrous feedstock as such.

In a another embodiment, the fibrous feedstock comprises recycled paper or recycled cardboard products or combinations thereof having an original ash content of up to 10 % or more, for example up to 20 %, which have been subjected to pretreatment for reducing the ash content to less than about 3, in order to provide said fibrous material. In such an embodiment, the feedstock can be subjected to a mechanical or chemical operation, for example by fine classification or sieving, to lower the content from about 10 to 20 % to 3 % or less.

In still another embodiment, which can be combined with the previous one, the fibrous feedstock comprises recycled paper or recycled cardboard products or combinations thereof having an original lignin content of up to 20 % by weight, which is subjected to chemical delignification for reducing the lignin content to less than 10 % by weight, in particular less than 5 % by weight, in order to provide said fibrous material.

The pre-processing can be effected for example by an alkaline treatment using hydroxide or carbonate compounds, such as alkali metal or earth alkaline metal hydroxides or carbonates or combinations thereof. In particular, the delignification can be carried out by kraft pulping, soda pulping typically or oxygen delignification, preferably at an increased temperature (of 50 - 200 °C). The kraft pulping or soda pulping are typically carried out about 140 - 180 °C and the oxygen delignification at 80 - 120 °C.

During the alkaline conditions of the pre-treatment, also the hemicelluloses content will be reduced.

In a third embodiment which can be combined with both of the two earlier embodiments, the fibrous feedstock is first subjected to a preliminary step involving removal of impurities, washing or, in particular, deinking or pulping, for example for removing polymer films or coatings. This embodiment is applicable to printed matter made of paper and cardboard, alike.

Next, the fibrous material obtained, comprising the recycled feedstock or comprising the recycled feedstock which has been treated as explained above for reducing the ash and lignin content, is subjected to alkaline extraction (cold alkali extraction).

Typically, the cold alkali treatment is carried out by mixing the fibrous material with an alkali solution, for example with a concentrated alkali solution, so as to obtain a mixture containing from about 50 and up to 200 g/l, in particular 50 to 150 g/l of the alkali. The solution is allowed to be absorbed into the fibrous material at a temperature of 0 to 40 °C, preferably 10-25 °C. The alkali dissolve hemicelluloses from the fibrous material and the hemicellulose containing solution is separated from the fibrous material and separately recovered.

The obtained fibrous mass can be used as such as a dissolving pulp.

However it can also be subjected to a bleaching treatment carried out with oxidative chemical reagents and subsequent alkaline extraction in order to reduce the lignin content of the fibres. Various bleaching treatment employing oxygen, peroxide and peroxo acids, chlorine dioxide, hypochlorite and ozone can be employed.

The fibres recovered after bleaching are subjected to a chemical treatment for increasing accessibility of the cellulosic fibres, which treatment is preferably carried out with an enzyme selected from the group of endoglucanases, or with hypochlorite.

In another embodiment, the recovered fibres, optionally after a chemical treatment for increasing accessibility of the cellulosic fibres, are subjected in an aqueous slurry to acid treatment, whereby the pH of the slurry is less than 3.5.

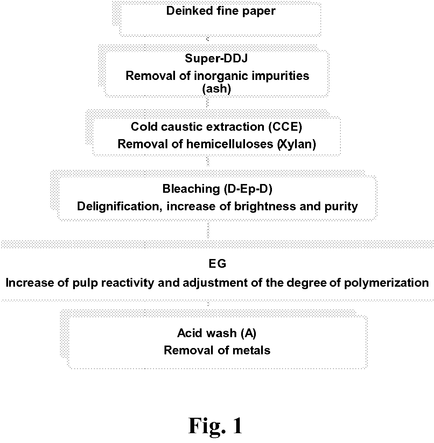

Turning now to the drawings, Figure 1 depicts a specific embodiment of a method for preparing dissolving pulp from deinked fine paper.

The first stage shown in the drawing is designated "**Super DDJ** filtration". The aim of this stage is to remove inorganic impurities (decreasing ash content) from the pulp. The second stage is the cold caustic extraction stage (**CCE**). By this treatment, hemicelluloses, especially xylan, are removed. The treatment of the deinked fine paper is continued by three-stage bleaching sequence, (**DEpD**) for removing residual lignin and to increase the pulp brightness and purity. After bleaching, preparation is continued by enzymatic treatment with endoglucanase (**EG**). The targets of this stage are to increase the pulp reactivity and to adjust the viscosity (or degree of polymerisation). The final, fifth step is acid washing **(A).** The objective of this stage is the removal of metals from the pulp.

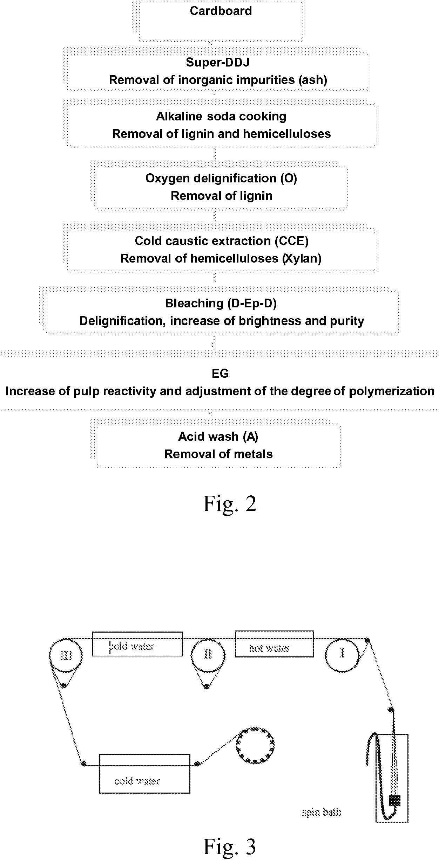

Figure 2 shows the treatment stages of cardboard.

The first stage of the preparation of dissolving pulp from the cardboard is **Super DDJ** filtration. Just as in the embodiment of Figure 1, the aim of this stage is to remove inorganic impurities (decreasing ash content). The second stage in the process is an alkaline soda cooking. This stage removes lignin and hemicelluloses. Processing is then continued with cold caustic extraction stage (**CCE**). The objective of this stage is to remove hemicelluloses, especially xylan. The treatment of cardboard is continued by three-stage bleaching sequence, (**DEpD**) for removing the residual lignin and to increase the pulp brightness and purity. After bleaching, preparation is continued by enzymatic treatment with endoglucanase (**EG**). The targets of this stage are to increase the pulp reactivity and to adjust the viscosity (or polymerisation degree). Finally, just as in the procedure of Figure 1, the obtained pulp is acid washed **(A)** in order to remove metals. Typically acid wash is carried out at a pH of below 3.

As a result of a process according to the present invention, fibres are recovered which exhibit at least one of the following properties:
- a lignin content of less than 0.7 % by weight, in particular a lignin content of 0.3 to 0.6 % by weight;
- a viscosity of 250 ml/g or more, preferably 550 ml/g or more;
- a Fock value of 55 % or better;
- cellulose 90 % or more; and
- a R18 % value of 88% or better

Typically, the fibres exhibit a hemicellulose content of 0.1 up to 10 % by weight.
A method as discussed above produces a dissolving pulp which can be used in the production of regenerated cellulosic fibres, films and foams, impregnated fiber products, and for the production of cellulosic derivatives, and for the production of nanocellulosic products.

Specifically, the pulp can be used for the production of regenerated cellulosic products for example by regeneration processes selected from the group of viscose process, NMMO process, enzymatic processes and the carbamate process.

In a particular embodiment, the method and the pulp can be used for the production of regenerated cellulosic products by carbamate process of a mechanochemical solvent free dry technique. In this respect reference is made in particular to the methods disclosed in US 7,662,953 and US 8,066,903, the contents of which is herewith incorporated by reference.

The following non-limiting examples illustrate the present technology.

### Materials and analysis methods

The fibre raw material used in Example 1 was deinked fine paper and that in Example 2 was recycled cardboard. The detailed fibre compositions of the raw materials are presented in Table 1. The deinked fine paper had the following fibre composition: about 90% of wood free pulp fibres and 10% of wood containing pulp fibres. In the recycled cardboard the composition ratio wood free pulp fibres to wood containing pulp fibres was about 70:30.

**Table 1. Fibre composition of recycled raw materials**

| | **wood free pulps** | | **wood containing pulps** | | |
|---|---|---|---|---|---|
| | **Bleached hardwood kraft, %** | **Softwood (unbl.) kraft, %** | **Semichemical/ CTMP hardwood, %** | **Mechanical/ CTMP softwood,%** | **Softwood: Hardwood ratio** |
| **Fine paper** | 62 | 30 | 2 | 6 | 36:64 |
| **Cardboard** | 26 | 41 (27) | 33 | - | 41:59 |

The chemical composition and other properties of the raw materials used in the experiments are presented in Tables 2 and 3. Due to the higher portion of wood containing pulp fibres in the cardboard, it had higher lignin, extractives and cellulose content, and lower brightness than the fine paper. The fine paper was deinked and therefore it had lower ash content, and the pulp brightness was higher.

**Table 2. Chemical composition of recycled raw materials**

| | **Cellulose %** | **Lignin %** | **Extractives %** | **Xylan %** | **Glucomannan %** |
|---|---|---|---|---|---|
| **Fine paper** | 76.6 | 2.4 | 0.2 | 15.9 | 4.9 |
| **Cardboard** | 57.6 | 16.6 | 5 | 14.5 | 6.3 |

**Table 3. Properties of recycled raw materials**

| | **Brightness %** | **Kappa number %** | **Viscosity ml/g** | **Ash at 525°C %** | **Ash at 900°C %** |
|---|---|---|---|---|---|
| **Fine paper** | 79.9 | 8.7 | 800 | 2.0 | 1.4 |
| **Cardboard** | 32.8 | 82.7 | 740 | 7.9 | 6.0 |

The properties of the raw materials and the produced pulps in Example 1 and 2 were analysed using the methods described in Table 4.

The polysaccharide composition, i.e. content of cellulose, xylan and glucomannan, was calculated based on Janson's method /1/.

In these calculations, the fine paper was supposed to consist of 64% of chemical hardwood fibres (birch) and 36% of chemical softwood fibres (pine).

The composition of the cardboard was supposed to be 59% of chemical hardwood fibres and 41% of chemical softwood fibres.

R18 analysis was used to measure alkali resistance of the pulp. It tells the amount of fibre material which does not dissolve to 18% NaOH solution at room temperature during one hour.

The Fock method was used to describe the reactivity of dissolving pulp /2/. In this method pulp is dissolved in an excess of NaOH and CS₂. Cellulose xanthate is formed and a certain amount of the xanthate is thereafter regenerated. Finally the cellulose yield was determined.

**Table 4. Analysis methods used for raw materials and produced pulps**

| Fibre composition | internal based on microscopy |
|---|---|
| Chemical composition: | |
| • acetone extract | SCAN-CM 49:03 |
| • lignin | TAPPI-T 222 om-02 modif |
| • carbohydrates | SCAN-CM 71:09 |
| • content of cellulose, xylan and glucomannan | Based on Janson J., Analytik der Polysaccharide in Holz und Zellstoff, Faserforschung und Textiltechnik 25, 1974, p. 375-382. |
| Ash content: | |
| • 525°C | ISO 1762:2001 |
| • 900°C | ISO 2144:199 |
| Brightness | ISO 2470-1: 2009 from splitted sheet |
| Kappa number | ISO 302:2004 |
| Viscosity | ISO 5351:2010 |
| Metal content | wet combustion (the samples are dissolved in nitric acid in a microwave oven before the analysis)+ ICP-AES |
| R18 | ISO 699:1982 |
| Fock | Based on Fock, W., Das Papier 13(3), p. 92-95, (1959). |

The produced dissolving pulps were dissolved using carbamate treatment. After the carbamate treatment the wet spinning was performed. Table 5 shows the methods used in analysing the carbamated pulps and carbamate solutions. Table 6 shows the methods used for analysing the wet spun fibres.

**Table 5. Analysis method used for carbamated pulps and carbamate solutions**

| | |
|---|---|
| DP degree of polymerization | the viscosity is determined according to ISO 5351:2010 to evaluate the DP on the empirical basis (Gullichsen, J., Paulapuro, H, Papermaking Science and technology, Fapet 2000 /3/) |
| Nitrogen content | Kjeltek device |
| Degree of purity of the carbamate pulp | by washing and by measuring the content of residues |
| Viscosity of the carbamate solution | conventional ball method (Sihtola, H. Paperi ja puu 44(1962):5, pp. 295-300/4/) and/or by a Brookfield viscometer |
| Fibre residue of the solution | microscopically by using a subjective scale from 1 to 5 in such a way that 1: clear solution with no fibres and %: turbid solution containing a lot of whole fibres, fibre bundles and/or gel-like structures |

The wet spun fibres were tested as follows: The fibres were conditioned at a relative humidity of 65 and temperature of 20° C for at least 24 h. The mechanical properties were determined as an average of 20 measurements according to the ISO 1973 and ISO 5079 standards using a Vibroskop and Vibrodyn testing machines (Lenzing AG). The tests included titre, tenacity, elongation, Young's modulus at 1% elongation and work of rupture. The rate of elongation was 20 mm min-1 and the gauge length 20 mm.

### Example 1. Preparation of dissolving pulp from deinked fine paper

The treatment stages of the deinked fine paper are presented in Figure 1.

The first stage of the preparation of dissolving pulp from deinked fine paper was **Super DDJ** filtration. The aim of this stage was to remove inorganic impurities (decreasing ash content) from the pulp. Raw material was diluted (about 0.5-1% consistency) and filtrated using a tank with a 200-mesh wire and a mixer. This procedure was repeated eight times. Ash content decreased from 2.0% to 0.6%.

The second stage was cold caustic extraction stage (**CCE**). The objective of this stage was the removal of hemicelluloses, especially Xylan. Extraction stage was carried out at room temperature using 70 g NaOH/l alkali concentration and 10% consistency for one hour. After CCE stage pulp was washed five times by diluting it to 5% consistency with cold deionised water and dewatering it to about 15% consistency. After that the pulp was diluted to 4% consistency and pH was adjusted to 7. The next day the pulp was dewatered to 25-30 % consistency.

The treatment of the deinked fine paper was continued by three-stage bleaching sequence, (**DEpD**). The target of the bleaching was to remove the residual lignin and to increase the pulp brightness and purity. Bleaching conditions are shown in Table 6.

**Table 6. Bleaching conditions for DEpD sequence**

| | D0 | Ep | D1 |
|---|---|---|---|
| ClO₂ charge as act. Cl, % | 1.5 | | 1.0 |
| NaOH charge, % | | 0.9 | 0.1 |
| H₂O₂ charge, % | | 0.5 | |
| Reaction time, min | 60 | 60 | 120 |
| Temperature, °C | 60 | 75 | 70 |
| Consistency, % | 9 | 10 | 9 |

In **D-stages** preheated pulp was added to the reactor first and after that water and acid or alkali (for pH adjustment). After mixing pH was measured, and chlorine dioxide was charged into the reactor, and the cover of the reactor was closed immediately. During the reaction time the pulp was mixed. After the reaction time, final pH was measured from the pulp in the reaction temperature. The residual chlorine content of the bleaching filtrate was determined. The pulp was diluted and washed in a standard way.

In **hydrogen peroxide assisted alkaline extraction stage (Ep)** the pulp and most of water was heated to the reaction temperature in a microwave oven and placed into the reactor. Alkali and hydrogen peroxide with additional water was charged and the pulp slurry was mixed and pH was measured. During the reaction time the pulp slurry was mixed. After the reaction time, final pH was measured from the pulp in the reaction temperature. The residual hydrogen peroxide content of the bleaching filtrate was determined. The pulp was diluted and washed in a standard way.

Washing between bleaching stages was always a standard laboratory washing: Pulp was diluted to 5% consistency with deionized water, which temperature was the same as that of the preceding bleaching stage. After dewatering, the pulp was washed two times with cold deionized water with amount equivalent to ten times the absolutely dry pulp amount.

After the bleaching, preparation was continued by enzymatic treatment with endoglucanase (**EG**). The targets of this stage were to increase the pulp reactivity and to adjust the viscosity (or degree of polymerisation). Enzyme charge was about 6 ml/kg. At first the pulp and part of water were heated to the reaction temperature in a microwave oven and placed into the reactor. Then pH of the pulp was adjusted with sulphur acid to pH value of 5. Enzyme was mixed with the rest of the preheated water and added into reactor. Reaction conditions were as follows: 50°C, 9% consistency and 120 minutes. After the reaction time pulp was washed with hot water (> 85°C) by diluting pulp to 4% consistency (retention time 10 minutes). After dewatering, the pulp was washed two times with cold deionized water with amount equivalent to ten times the absolutely dry pulp amount.

The next step was acid washing **(A).** The objective of this stage was the removal of metals from the pulp. Acid wash was carried out at pH 2.5, room temperature and in 2.5% consistency. Sulphur acid was used for pH adjustment. The pulp was diluted and washed in a standard way. The last preparation stage was drying of the pulp. Drying was carried out over night in an oven having temperature of about 40°C.

Preparation procedure described above gave dissolving pulp, which had alkali resistance of 93.9%, reactivity of (according to Fock method) 62.9%, viscosity of 510 ml/g, xylan content of 4.8%, lignin content of 0.2%, extractives content of 0.08% and ash content of 0.04%. These properties are rather typical or even better than those with commercial dissolving pulps. Only the pulp reactivity was slightly lower and the xylan content higher. The properties of the produced dissolving pulp are presented in Tables 7 and 8.

**Table 7. Chemical composition of dissolving pulp produced from deinked fine paper.**

| | **Cellulose %** | **Lignin %** | **Extractives %** | **Xylan %** | **Glucomannan %** |
|---|---|---|---|---|---|
| **Fine paper** | 90.4 | 0.2 | 0.08 | 4.8 | 4.3 |

**Table 8. Properties of dissolving pulp produced from deinked fine paper.**

| | **Brightness %** | **Kappa number** | **Viscosity ml/g** | **Ash at 525°C %** | **Ash at 900°C %** | **R18 %** | **Fock %** |
|---|---|---|---|---|---|---|---|
| **Fine paper** | 87.1 | 0.9 | 510 | 0.05 | 0.04 | 93.8 | 62.9 |

### Example 2. Preparation of dissolving pulp from cardboard

The treatment stages of cardboard are presented in Figure 2.

The first stage of the preparation of dissolving pulp from the cardboard was **Super DDJ** filtration. The aim of this stage was to remove inorganic impurities (decreasing ash content). Raw material was diluted (about 0.5-1% consistency) and filtrated using a tank with a 200-mesh wire and a mixer. This was repeated eight times. Ash content decreased from 7.9% to 1.4%.

The second stage was alkaline soda cooking. The target of this stage was the removal of lignin and hemicelluloses. Cooking conditions were as follows: NaOH charge 20%, cooking temperature 165°C, H factor 1000 and liquor to wood ratio 6. After cooking stage pulp was washed and then the delignification was continued with oxygen delignification stage. Process conditions were as follows: 12% consistency, 100°C temperature, 4% NaOH charge, 13.5 bar oxygen pressure and 95 minutes reaction time. After the oxygen delignification the pulp was washed.

Processing was continued with cold caustic extraction stage (**CCE**). The objective of this stage was to remove hemicelluloses, especially Xylan. Extraction stage was carried out at room temperature using 70 g NaOH/l alkali concentration and 10% consistency for one hour. After CCE stage the pulp was washed five times by diluting it to 5% consistency with cold deionised water and dewatering it to about 15% consistency. After that the pulp was diluted to 4% consistency and pH was adjusted to 7. The next day the pulp was dewatered to 25-30 % consistency.

The treatment of card board was continued by three-stage bleaching sequence, (**DEpD**). The target of the bleaching was to remove the residual lignin and to increase the pulp brightness and purity. Bleaching conditions are shown in Table 9.

**Table 9. Bleaching conditions for DEpD sequence**

| | D0 | Ep | D1 |
|---|---|---|---|
| ClO₂ charge as act. Cl, % | 1.0 | | 0.4 |
| NaOH charge, % | | 0.9 | 0.05 |
| H₂O₂ charge, % | | 0.5 | |
| Reaction time, min | 60 | 60 | 120 |
| Temperature, °C | 60 | 75 | 70 |
| Consistency, % | 9 | 10 | 9 |

In **D-stages** preheated pulp was added to the reactor first and after that water and acid or alkali (for pH adjustment). After mixing pH was measured, and chlorine dioxide was charged into the reactor, and the cover of the reactor was closed immediately. During the reaction time the pulp was mixed. After the reaction time, final pH was measured from the pulp in the reaction temperature. The residual chlorine content of the bleaching filtrate was determined. The pulp was diluted and washed in a standard way.

In **hydrogen peroxide assisted alkaline extraction stage (Ep)** the pulp and most of water was heated to the reaction temperature in a microwave oven and placed into the reactor. Alkali and hydrogen peroxide with additional water was charged and the pulp slurry was mixed and pH was measured. During the reaction time the pulp slurry was mixed. After the reaction time, final pH was measured from the pulp in the reaction temperature. The residual hydrogen peroxide content of the bleaching filtrate was determined. The pulp was diluted and washed in a standard way.

Washing between bleaching stages was always a standard laboratory washing: Pulp was diluted to 5% consistency with deionized water, which temperature was the same as that of the preceding bleaching stage. After dewatering, the pulp was washed two times with cold deionized water with amount equivalent to ten times the absolutely dry pulp amount.

After the bleaching, preparation was continued by enzymatic treatment with endoglucanase (**EG**). The targets of this stage were to increase the pulp reactivity and to adjust the viscosity (or degree of polymerisation). Enzyme charge was about 6 ml/kg. At first the pulp and part of water were heated to the reaction temperature in a microwave oven and placed into the reactor. Then pulp pH was adjusted with sulphur acid to 5. Enzyme was mixed with the rest of the preheated water and added into reactor. Reaction conditions were 50°C, 9% consistency and 120 minutes. After reaction time pulp was washed with hot water (> 85°C) by diluting pulp to 4% consistency (retention time 10 minutes). After dewatering, the pulp was washed two times with cold deionized water with amount equivalent to ten times the absolutely dry pulp amount.

Next pulp was acid washed **(A)** in order to remove metals. Acid wash was carried out at pH 2.5, room temperature and in 2.5% consistency. Sulphur acid was used for pH adjustment. The pulp was diluted and washed in a standard way. The last preparation stage was drying of the pulp. Drying was carried out over night in an oven having temperature about 40°C.

Preparation procedure described above gave dissolving pulp, which had alkali resistance of 90.7%, reactivity of (according to Fock method) 81.1%, viscosity of 250 ml/g, xylan content of 4.2%, lignin content of 0.6%, extractives content of < 0.05% and ash content of 0.11%. These properties are rather typical or even better than those of commercial dissolving pulps. The xylan content of the pulp was higher, and also the lignin content was slightly higher than that of the commercial dissolving pulp (<0,5%). The properties of the produced dissolving pulp are presented in Tables 10 and 11.

**Table 10. Chemical composition of dissolving pulp produced from cardboard**

| | **Cellulose %** | **Lignin %** | **Extractives %** | **Xylan %** | **Glucomannan %** |
|---|---|---|---|---|---|
| **Cardboard** | 91.2 | 0.6 | <0.05 | 4.2 | 3.8 |

**Table 11. Properties of dissolving pulp produced from cardboard**

| | **Brightness %** | **Kappa number** | **Viscosity ml/g** | **Ash at 525°C %** | **Ash at 900°C %** | **R18 %** | **Fock %** |
|---|---|---|---|---|---|---|---|
| **Cardboard** | 85.9 | 0.6 | 250 | 0.11 | 0.08 | 90.7 | 81.1 |

### Example 3. Treatment of the dissolving pulps (Example 1 and 2) using carbamate method and wet spinning

### Carbamate treatment

The obtained dissolving pulps (Example 1 and 2) were treated using carbamate method /5, 7/. In this method is first prepared carbamate cellulose which is then dissolved in NaOH-solution which is finally spinned and regenerated into fibres. The carbamation synthesis is done in dry state with urea. The urea feed is 20% calculated from dry pulp. Dissolving is performed in two steps, first by moistening cellulose carbamate pulp with a dilute alkaline solution, as cold as possible, to the pulp under intensive stirring. The technique utilizes the low freezing point of the aqueous NaOH solution at the concentration of 18%, wherein the freezing point is below -20 °C, and the intensive stirring function of the dissolve mixer device during the dosage. It is possible to prepare solutions of high quality and having high dry matter content in a mixing time of a few minutes only.

Table 12 indicates the characteristics of pulps after of the carbamate reaction. DP (Degree of polymerization) gives an estimate of the mechanical and physical properties of the final product (e.g. fibres and films) and it is the main adjustable parameter in the process. The higher the DP level, the more diluted solutions must be used, if the level of viscosity is limited because of application technique (here fiber spinning). The optimal DP level and cellulose content must be found separately in each case. Normally, on the manufacture of regenerated fibres, the desired DP level is in the range from 200 to 400. N% the nitrogen content of the solution indicates the degree of substitution. The degree of substitution refers to the average number of substituent attached to one glucose unit.

**Table 12. Characteristics of pulps after carbamate reaction**

| Carbamated pulp grade | DP | N% |
|---|---|---|
| Fine paper | 289 | 1.5 |
| Cardboard | 290 | 2.2 |
| ref commercial dissolving pulp | 330 | 1.2 |

### Wet spinning

The fibres were spun using a laboratory wet spinning machine /6/. The spin dope was pushed from a sealed reservoir to a gear pump by nitrogen gas. The spinning head with one spinneret was immersed in a vertical spin bath tank. The spinneret used had 100-250 orifices of 45-51 lm and was made of a gold/platinum material. The spinning line consisted of three godet rolls, one stretching bath with hot demineralised water, two washing baths with cold demineralised water and a fibre collector (Fig. 3). A solution of sodium lauryl sulphate (0.1%) was used to lubricate the godet rolls I, II, III during spinning.

Table 13 shows the common processing and material parameters for the laboratory wet spinning trials.

**Table 13. Common processing and material parameters of example spinning trials**

| | |
|---|---|
| Cellulose concentration % | 6.3 |
| Solution NaOH % | 8.5 |
| Solution ZnO % | 1 |
| Solution temperature C | 2 |
| Spin bath temperature C | 20 |
| Spin bath content | 8% H₂SO₄, 10% Na₂SO₄ |
| Solution ball viscosity s (T 20 °C) | 20 |
| Solution turbidity NTU | < 50 |
| Filtering sieve figure µm | 10 |
| Spinneret n x d - µm | 100 x 51 |
| Line speed VIII m/min | 20 |

Table 14 shows the processing stretch ratio, fibre titre and mechanical properties of the fibres obtained in wet spinning.

**Table 14. Processing stretch ratio, fibre titre, and mechanical properties of example fibres**

| Pulp grade | Stretch ratio % | Titre (dtex) | Tenacity (cN/dtex) | Stretch % |
|---|---|---|---|---|
| Fine paper | 60 | 2.42 | 1.93 | 21 |
| | 80 | 2.31 | 2.02 | 20 |
| | 100 | 1.97 | 2.00 | 17 |
| | 120 | 1.86 | 2.07 | 16 |
| Cardboard | 60 | 2.55 | 1.72 | 22 |
| | 80 | 2.40 | 1.83 | 20 |
| | 100 | 2.06 | 1.91 | 18 |
| | 140 | 1.99 | 1.97 | 16 |
| Ref commercial dissolving pulp | 60 | 2.58 | 1.98 | 21 |
| | 80 | 2.10 | 2.01 | 18 |
| | 100 | 1.97 | 2.14 | 15 |
| Ref viscose /6/ | | 1.9 | 2.1 | |

Summarizing the above, it can be noted that the process of the present technology comprises in a preferred embodiment a stage for removing inorganic impurities, a cold caustic extraction stage for the xylan extraction, bleaching with oxidative chemicals for delignification and to increase the pulp brightness and purity, a stage to increase the reactivity of pulps and to adjust pulp viscosity (or degree of polymerisation), and finally acid washing for metals removal. For the raw material having high initial lignin content additional delignification stages can be carried out using alkaline delignification agents.

With the technology disclosed, including the above purification procedure, dissolving pulps having alkali resistance (R18) and cellulose content of over 90% and reactivity of 60 to 85%, in particular 63 to 81%, measured using Fock method, can be prepared.

The dissolving pulps thus obtained have very good mechanical properties. During testing it has been found that the tenacity of fibers is approximately the same as for native dissolved reference cellulose made from commercial dissolving pulp and approximately the same as for existing commercial viscose nonwoven fibers. "Approximately" stands for a variation of max. ±10 %.

A particular use for the dissolving pulps prepared from recycled fibers is as a raw-material for the carbamate process.

As is apparent from the above, the present invention achieves considerable advantages. It has surprisingly been found that by means of the present invention recycled fibres, even mechanically degraded and weakened fibres, selected from but not limited to recycled or circulated papers or cardboards containing cellulose, lignin and hemicelluloses, further containing fillers, metals, fines and other impurities that are typically difficult to remove, serve well as raw material for dissolving pulps. Based on the examples given, dissolving pulps produced by the present technology have properties comparable with or even superior to the commercial reference pulps used for reference.

### References:

1. Janson J., Analytik der Polysaccharide in Holz und Zellstoff, Faserforschung und Textiltechnik 25, 1974, p. 375-382.
2. Fock, W. Eine modifizierte method zur Bestimmung der Reaktivität von Zellstoffen für viskosherstellung. Das Papier 13(3), p. 92-95, (1959)
3. Gullichsen, J., Paulapuro, H, Papermaking Science and Technology, Fapet 2000.
4. Sihtola, H. Paperi ja puu 44(1962):5, pp. 295-300.
5. US Patent No. 8,066, 903.
6. Vehviläinen, M., Kamppuri, T., Rom, M., Janicki, J., Ciechanska, D., Grönqvist, S., Siika-aho, M., Elg Christoffersson, K., Nousiainen, P. Effect of wet spinning parameters on the properties of novel cellulosic fibres, Cellulose (2008) 15:671-680.
7. US Patent No. 7,662,953
8. US Patent No. 6,254,722
9. WO2010/104458
10. European Patent Application No. 0 637 351

## Claims

1. A method of producing dissolving pulp from a recycled fibrous feedstock, comprising the steps of
- providing a fibrous material comprising cellulose, lignin and hemicellulose, said fibre source further having a lignin content of 0.1 to 7 % lignin and an ash content of up to 3 %;
- subjecting the fibrous material to an alkaline extraction at a temperature of about 0 to 25 °C, wherein the fibrous material is mixed with an alkali solution so as to obtain a mixture containing from about 50 and up to 200 g/l of the alkali, to produce fibres having a reduced content of hemicellulose;
- reducing the lignin content of the thus obtained fibres by subjecting the fibres to a bleaching treatment carried out with oxidative chemical reagents selected from the group consisting of oxygen, peroxide, peroxo acids, chlorine dioxide, hypochlorite and ozone;
- recovering the fibres thus obtained; and
- subjecting the fibres recovered after bleaching to a chemical treatment for increasing accessibility of the cellulosic fibres, said treatment being carried out with an enzyme selected from the group of endoglucanases, or with hypochlorite.

2. The method according to claim 1, wherein the recycled fibrous feedstock is selected from recycled paper and recycled cardboard products and combinations thereof which comprise at least 1 % by weight of lignocellulosic fibre materials.

3. The method according to claim 1 or 2, wherein the fibrous material comprises the recycled fibrous feedstock or is produced therefrom.

4. The method according to any of the preceding claims, wherein the fibrous material comprises at least 50 % by weight of cellulosic fibres, in particular the fibrous material comprises 50 to 95 % by weight of fibres of chemical pulping and 5 to 50 % by weight of fibres of mechanical pulping.

5. The method according to any of the preceding claims, wherein the cellulosic fibres are derived from deciduous tree, coniferous tree or combinations thereof, preferably at the most 70 %, in particular at the most 60 %, by weight of the fibre source consists of fibres derived from deciduous tree.

6. The method according to any of the preceding claims, wherein the recovered fibres, optionally after a chemical treatment for increasing accessibility of the cellulosic fibres, are subjected in an aqueous slurry to acid treatment, whereby the pH of the slurry is less than 3.5.

7. The method according to any of the preceding claims, wherein the fibrous feedstock comprises recycled paper or recycled cardboard products or combinations thereof having an original ash content of up to 10 % or more, which have been subjected to a mechanical or chemical operation, for example a filtration treatment, for reducing the ash content to less than about 3, in order to provide said fibrous material.

8. The method according to any of the preceding claims, wherein the fibrous feedstock comprises recycled paper or recycled cardboard products or combinations thereof having an original lignin content of up to 20 % by weight, which have been subjected to chemical delignification with an alkaline cooking chemical, such as sodium hydroxide, for reducing the lignin content to less than 10 % by weight, in particular less than 5 % by weight, in order to provide said fibrous material, in particular the delignification is carried out by kraft pulping, soda pulping or oxygen delignification.

9. The method according to any of the preceding claims, wherein said bleaching is carried out with oxidative chemicals selected from the group of peroxides and peracids, chlorine dioxide, hypochlorite and ozone and combinations thereof, and optionally said bleached pulp is subjected to alkaline extraction, in order to reduce the lignin content of the fibres.

10. The method according to any of the preceding claims, wherein the recycled papers are selected from office papers, and the recycled cardboard products are selected from liner clippings, which optionally are deinked before subjected to further processing.

11. The method according to any of the preceding claims, wherein the fibres recovered exhibit at least one of the following properties:
- a lignin content of less than 0.7 % by weight, in particular a lignin content of 0.3 to 0.6 % by weight;
- a viscosity of 250 ml/g or more, preferably 550 ml/g or more;
- a Fock value of 55 % or better;
- cellulose 90 % or more; and
- a R18 % value of 88% or better

12. The method according to any of the preceding claims, wherein the fibres recovered exhibit a hemicellulose content of 0.1 up to 10 % by weight.

13. Use of a method according to any of the preceding claims for producing pulp for the production of regenerated cellulosic fibres, films and foams, impregnated fiber products, and for the production of cellulosic derivatives, and for the production of nanocellulosic products.

14. Use of a method according to any of the preceding claims for producing pulp for the production of regenerated cellulosic products by a regeneration process selected from the group of viscose process, NMMO process, enzymatic processes and the carbamate process, in particular for the production of regenerated cellulosic products by carbamate process of a mechanochemical solvent free dry technique.

## Patentansprüche

1. Verfahren zur Herstellung von Chemiezellstoff aus einem recycelten faserigen Ausgangsmaterial, umfassend die Schritte von
- Bereitstellen eines Fasermaterials, umfassend Cellulose, Lignin und Hemicellulose, wobei die Faserquelle weiter einen Ligningehalt von 0,1 bis 7 % Lignin und einen Aschegehalt von bis zu 3 % aufweist;
- Unterziehen des Fasermaterials einer alkalischen Extraktion bei einer Temperatur von etwa 0 bis 25°C, wobei das Fasermaterial mit einer Alkalilösung gemischt wird, um eine Mischung zu erhalten, die etwa von 50 und bis zu 200 g/l des Alkalis enthält, um Fasern mit einem reduzierten Gehalt an Hemicellulose herzustellen;
- Reduzieren des Ligningehalts der so erhaltenen Fasern durch Unterziehen der Fasern einer Bleichbehandlung, die mit oxidativen chemischen Reagenzien durchgeführt wird, die ausgewählt sind aus der Gruppe bestehend aus Sauerstoff, Peroxid, Peroxosäuren, Chlordioxid, Hypochlorit und Ozon;
- Rückgewinnung der so erhaltenen Fasern und
- Unterziehen der nach dem Bleichen zurückgewonnenen Fasern einer chemischen Behandlung zur Verbesserung der Zugänglichkeit der Cellulosefasern, wobei die Behandlung mit einem Enzym aus der Gruppe der Endoglucanasen oder mit Hypochlorit durchgeführt wird.

2. Verfahren nach Anspruch 1, wobei das recycelte faserige Ausgangsmaterial ausgewählt ist aus recycelten Papier und recycelten Kartonprodukten und Kombinationen davon, die mindestens 1 Gew.-% Lignocellulosefasermaterialien umfassen.

3. Verfahren nach Anspruch 1 oder 2, wobei das Fasermaterial das recycelte faserige Ausgangsmaterial umfasst oder daraus hergestellt wird.

4. Verfahren nach einem der vorstehenden Ansprüche, wobei das Fasermaterial mindestens 50 Gew.-% Cellulosefasern umfasst, insbesondere das Fasermaterial 50 bis 95 Gew.-% Fasern aus Zellstoff und 5 bis 50 Gew.-% Fasern aus mechanischer Zellstoffherstellung umfasst.

5. Verfahren nach einem der vorstehenden Ansprüche, wobei die Cellulosefasern vom Laubbaum, Nadelbaum oder Kombinationen davon stammen, vorzugsweise höchstens 70 Gew.-%, insbesondere höchstens 60 Gew.-%, der Faserquelle aus Fasern bestehen, die vom Laubbaum stammen.

6. Verfahren nach einem der vorstehenden Ansprüche, wobei die zurückgewonnenen Fasern, gegebenenfalls nach einer chemischen Behandlung zur Erhöhung der Zugänglichkeit der Cellulosefasern, in einer wässrigen Aufschlämmung einer Säurebehandlung unterzogen werden, wobei der pH-Wert der Aufschlämmung kleiner als 3,5 ist.

7. Verfahren nach einem der vorhergehenden Ansprüche, wobei das faserige Ausgangsmaterial recyceltes Papier oder recycelte Kartonprodukte oder Kombinationen davon mit einem ursprünglichen Aschegehalt von bis zu 10 % oder mehr umfasst, die einem mechanischen oder chemischen Prozess, beispielsweise einer Filtrationsbehandlung, unterzogen wurden, um den Aschegehalt auf weniger als etwa 3 zu reduzieren, um das faserige Material bereitzustellen.

8. Verfahren nach einem der vorstehenden Ansprüche, wobei das faserige Ausgangsmaterial recyceltes Papier oder recycelte Kartonprodukte oder Kombinationen davon mit einem ursprünglichen Ligningehalt von bis zu 20 Gew.-% umfasst, die einer chemischen Delignifizierung mit einer alkalischen Kochchemikalie, wie beispielsweise Natriumhydroxid, unterzogen wurden, um den Ligningehalt auf weniger als 10 Gew.-%, insbesondere weniger als 5 Gew.-%, zu reduzieren, um das faserige Material bereitzustellen, insbesondere die Delignifizierung durch Kraftaufschluss, Natronaufschluss oder Sauerstoffdelignifizierung durchgeführt wird.

9. Verfahren nach einem der vorhergehenden Ansprüche, wobei das Bleichen mit oxidativen Chemikalien durchgeführt wird, die aus der Gruppe von Peroxide und Persäuren, Chlordioxid, Hypochlorit und Ozon und Kombinationen derselben ausgewählt sind, und optional der gebleichte Zellstoff einer alkalischen Extraktion unterzogen wird, um den Ligningehalt der Fasern zu reduzieren.

10. Verfahren nach einem der vorhergehenden Ansprüche, wobei die recycelten Papiere aus Büropapieren ausgewählt werden und die recycelten Kartonprodukte aus Linerabfällen ausgewählt werden, die gegebenenfalls deinkt werden, bevor sie einer weiteren Verarbeitung unterzogen werden.

11. Verfahren nach einem der vorhergehenden Ansprüche, wobei die zurückgewonnenen Fasern mindestens eine der folgenden Eigenschaften aufweisen:
- einen Ligningehalt von weniger als 0,7 Gew.-%, insbesondere einen Ligningehalt von 0,3 bis 0,6 Gew.-%;
- eine Viskosität von 250 ml/g oder mehr, vorzugsweise 550 ml/g oder mehr;
- einen Fockwert von 55% oder besser;
- Cellulose 90 % oder mehr; und
- einen R18 %-Wert von 88 % oder besser

12. Verfahren nach einem der vorhergehenden Ansprüche, wobei die zurückgewonnenen Fasern einen Hemicellulosegehalt von 0,1 bis 10 Gew.-% aufweisen.

13. Verwendung eines Verfahrens nach einem der vorstehenden Ansprüche zur Herstellung von Zellstoff für die Herstellung von regenerierten Cellulosefasern, Folien und Schäumen, imprägnierten Faserprodukten und für die Herstellung von Cellulosederivaten und für die Herstellung von Nanocelluloseprodukten.

14. Verwendung eines Verfahrens nach einem der vorstehenden Ansprüche zur Herstellung von Zellstoff für die Herstellung von regenerierten Celluloseprodukten durch einen Regenerationsprozess, ausgewählt aus der Gruppe von Viskoseprozess, NMMO-Prozess, enzymatischen Prozessen und dem Carbamatprozess, insbesondere zur Herstellung von regenerierten Celluloseprodukten durch Carbamatprozess einer mechanisch-chemischen lösungsmittelfreien Trockentechnik.

## Revendications

1. Procédé de production d'une pâte dissolvante à partir d'une charge d'alimentation fibreuse recyclée, comprenant les étapes suivantes
- la fourniture d'un matériau fibreux comprenant une cellulose, une lignine et une hémicellulose, ladite source de fibres présentant en outre une teneur en lignine de 0,1 à 7 % de lignine et une teneur en cendre allant jusqu'à 3 % ;
- la soumission du matériau fibreux à une extraction alcaline à une température d'environ 0 à 25 °C, dans lequel le matériau fibreux est mélangé avec une solution d'alcalin afin d'obtenir un mélange contenant à partir d'environ 50 et jusqu'à 200 g/l de l'alcalin, pour produire des fibres présentant une teneur réduite en hémicellulose ;
- la réduction de la teneur en lignine des fibres ainsi obtenues en soumettant les fibres à un traitement de blanchiment effectué avec des réactifs chimiques oxydants sélectionnés dans le groupe constitué de l'oxygène, du peroxyde, des peroxo acides, du dioxyde de chlore, de l'hypochlorite et de l'ozone ;
- la récupération des fibres ainsi obtenues ; et
- la soumission des fibres récupérées après blanchiment à un traitement chimique pour augmenter l'accessibilité des fibres cellulosiques, ledit traitement étant réalisé avec une enzyme sélectionnée dans le groupe des endoglucanases, ou avec de l'hypochlorite.

2. Procédé selon la revendication 1, dans lequel la charge d'alimentation fibreuse recyclée est sélectionnée parmi du papier recyclé et des produits de carton recyclé et des combinaisons de ceux-ci qui comprennent au moins 1 % en poids de matériaux de fibre lignocellulosique.

3. Procédé selon la revendication 1 ou 2, dans lequel le matériau fibreux comprend la charge d'alimentation fibreuse recyclée ou est produit à partir de celle-ci.

4. Procédé selon l'une quelconque des revendications précédentes, dans lequel le matériau fibreux comprend au moins 50 % en poids de fibres cellulosiques, en particulier le matériau fibreux comprend 50 à 95 % en poids de fibres de fabrication de pâtes chimiques et 5 à 50 % en poids de fibres de fabrication de pâtes mécaniques.

5. Procédé selon l'une quelconque des revendications précédentes, dans lequel les fibres cellulosiques sont dérivées d'un arbre à feuilles caduques, d'un conifère ou de combinaisons de ceux-ci, de préférence au plus 70 %, en particulier au plus 60 %, en poids de la source de fibres consistent en des fibres dérivées d'un arbre à feuilles caduques.

6. Procédé selon l'une quelconque des revendications précédentes, dans lequel les fibres récupérées, facultativement après un traitement chimique pour augmenter l'accessibilité des fibres cellulosiques, sont soumises dans une suspension aqueuse à un traitement acide, selon lequel le pH de la suspension est inférieur à 3,5.

7. Procédé selon l'une quelconque des revendications précédentes, dans lequel la charge d'alimentation fibreuse comprend du papier recyclé ou des produits de carton recyclé ou des combinaisons de ceux-ci présentant une teneur en cendre d'origine allant jusqu'à 10 % ou plus, qui ont été soumis à une opération mécanique ou chimique, par exemple un traitement de filtration, pour réduire la teneur en cendre à moins d'environ 3, afin de fournir ledit matériau fibreux.

8. Procédé selon l'une quelconque des revendications précédentes, dans lequel la charge d'alimentation fibreuse comprend du papier recyclé ou des produits de carton recyclé ou des combinaisons de ceux-ci présentant une teneur en lignine d'origine allant jusqu'à 20 % en poids, qui ont été soumis à une délignification chimique avec un produit chimique de cuisson alcaline, tel que l'hydroxyde de sodium, pour réduire la teneur en lignine à moins de 10 % en poids, en particulier à moins de 5 % en poids, afin de fournir ledit matériau fibreux, en particulier la délignification est réalisée par fabrication de pâtes Kraft, fabrication de pâte à la soude ou délignification à l'oxygène.

9. Procédé selon l'une quelconque des revendications précédentes, dans lequel ledit blanchiment est réalisé avec des produits chimiques oxydants sélectionnés dans le groupe des peroxydes et des peracides, du dioxyde de chlore, de l'hypochlorite et de l'ozone et des combinaisons de ceux-ci, et facultativement ladite pâte blanchie est soumise à une extraction alcaline, afin de réduire la teneur en lignine des fibres.

10. Procédé selon l'une quelconque des revendications précédentes, dans lequel les papiers recyclés sont sélectionnés parmi les papiers de bureau, et les produits de carton recyclé sont sélectionnés parmi les chutes de pochette, lesquels sont facultativement désencrés avant d'être soumis à un traitement supplémentaire.

11. Procédé selon l'une quelconque des revendications précédentes, dans lequel les fibres récupérées présentent au moins l'une des propriétés suivantes :
- une teneur en lignine de moins de 0,7 % en poids, en particulier une teneur en lignine de 0,3 à 0,6 % en poids ;
- une viscosité de 250 ml/g ou plus, de préférence de 550 ml/g ou plus ;
- une valeur Fock de 55 % ou plus ;
- 90 % de cellulose ou plus ; et
- une valeur de % de R18 de 88 % ou plus.

12. Procédé selon l'une quelconque des revendications précédentes, dans lequel les fibres récupérées présentent une teneur en hémicellulose de 0,1 à 10 % en poids.

13. Utilisation d'un procédé selon l'une quelconque des revendications précédentes pour produire une pâte pour la production de fibres, films et mousses cellulosiques régénérés, de produits de fibres imprégnées, et pour la production de dérivés cellulosiques, et pour la production de nanoproduits cellulosiques.

14. Utilisation d'un procédé selon l'une quelconque des revendications précédentes pour produire une pâte pour la production de produits cellulosiques régénérés par un procédé de régénération sélectionné dans le groupe du procédé viscose, du procédé NMMO, des procédés enzymatiques et du procédé au carbamate, en particulier pour la production de produits cellulosiques régénérés par un procédé au carbamate d'une technique mécanochimique sèche sans solvant.
